# FASCICULE DE BREVET EUROPEEN

(11) **EP 0 622 285 B1**
(45) Date de publication et mention de la délivrance du brevet: **16.12.1998**
(21) Numéro de dépôt: 94400912.5
(22) Date de dépôt: 27.04.1994
(51) Int. Cl.: B61D 17/04, B62D 31/02

(54) **Caisse de véhicule ferroviaire allégée**
Leichtbau-Wagenkasten eines Schienenfahrzeuges
Lightweight body of a railway vehicle

(30) Priorité: 28.04.1993 FR 9305011
(43) Date de publication de la demande: 02.11.1994
(73) Titulaire: GEC ALSTHOM TRANSPORT SA, 75116 Paris (FR)
(72) Inventeur: Devallez, Alain, F-59278 Escaupont (FR); Jakubowski, Henri, F-62860 Marquion-Recourt (FR)
(74) Mandataire: Gosse, Michel

(56) Documents cités:
- EP-A- 0 260 200
- EP-A- 0 427 140
- EP-A- 0 474 510
- EP-A- 0 489 294
- GB-A- 1 490 575

## Description

La présente invention concerne une caisse de véhicule ferroviaire allégée.

On connaît, par le document GB-A-1 490 575, une caisse de véhicule ferroviaire conforme au préambule de la revendication 1 composée de plusieurs éléments monobloc répartis le long de l'axe longitudinal et reliés l'un à l'autre.

On connaît également, par le document EP-A-0 474 510, une caisse de véhicule ferroviaire combinant l'utilisation de structures sandwichs et l'utilisation d'éléments métalliques.

On connaît également, par le document FR-A-2 613 995, une caisse autoportante de véhicule ferroviaire permettant un gain de poids par rapport aux solutions les plus légères basées sur l'utilisation de profilés en alliage d'aluminium. Selon ce document, on proposait de réaliser la caisse de façon simple et économique tout en ayant une excellente résistance à la corrosion ainsi que des propriétés d'isolation thermique et acoustique. La caisse devait permettre aussi une intégration des accessoires et équipements ou supports d'équipement dans la structure de caisse proprement dite.

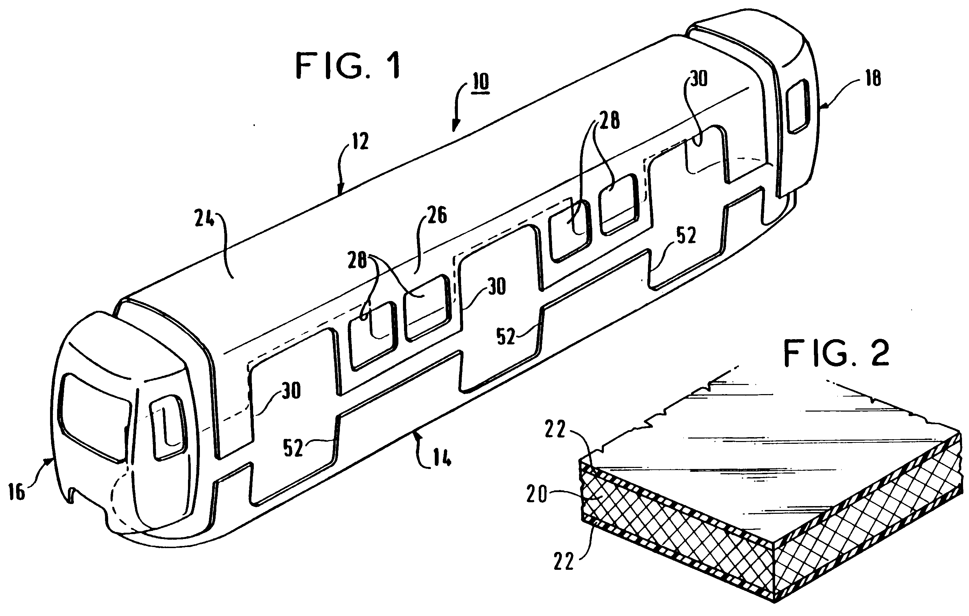

La caisse, selon le document FR-A-2 613 995, est constituée de parties moulées en matériau composite qui comportent les revêtements ou parements intérieurs et extérieurs de la caisse de véhicule. Dans le mode de réalisation proposé cette caisse comprend une demi-coque supérieure et une demi-coque inférieure réalisées chacune en une seule pièce et assemblées l'une à l'autre suivant un plan de joint sensiblement horizontal, et des extrémités avant et arrière réalisées également chacune en une seule pièce et fixées sur les extrémités longitudinales des demi-coques. Ces parties sont assemblées entre elles par boulonnage et par collage. Une telle caisse est représentée à la figure 1 annexée à la présente demande. Comme on peut le constater, l'assemblage des deux demi-coques entre elles se fait selon un joint longitudinal et central qui pose beaucoup de problèmes de réalisation et d'esthétique. Pour avoir un assemblage correct des deux demi-coques, il faut en effet que les portées à assembler soient très nettes. Cette contrainte est très difficile à satisfaire pour l'homme du métier étant donné la longueur d'une caisse et les longueurs à solidariser.

Un autre problème que soulève cette caisse entièrement réalisée en matériau composite est celui de sa résistance mécanique en cas de choc. En effet, si on connaît bien par l'expérience acquise dans ce domaine et par l'étude des véhicules accidentés le comportement aux chocs des véhicules métalliques, il n'en est pas de même pour les véhicules entièrement réalisés en matériau composite. Ceux-ci en sont toujours au stade de l'expérimentation. En outre les sociétés exploitant le matériel ferroviaire, très sensibilisées au problème des accidents, hésitent à accepter des changements technologiques aussi radicaux que le passage du véhicule entièrement métallique au véhicule entièrement réalisé en composite.

L'invention permet de remédier à ces problèmes en proposant une caisse de véhicule à la fois légère, grâce à une utilisation poussée de matériau composite, et résistante grâce à une ossature métallique.

L'invention a donc pour objet une caisse de véhicule ferroviaire allégée telle que définie dans la revendication principale.

Deux battants peuvent relier le pavillon aux faces latérales, les deux battants étant reliés entre eux par des traverses de bout, ces battants et traverses de bout étant des éléments métalliques. Ceci confère une plus grande résistance mécanique à la caisse et permet une réalisation plus aisée des éléments en matériau composite du fait que ces éléments sont distincts les uns des autres.

Les liaisons entre lesdits éléments principalement constitués de matériau composite et lesdits éléments métalliques peuvent être réalisées par l'intermédiaire de profils métalliques bordant les éléments principalement constitués de matériau composite et qui leur sont solidaires.

La solidarisation entre les profils métalliques et les éléments principalement constitués de matériau composite peut être réalisée par collage.

Les profils métalliques peuvent être collés et boulonnés aux éléments métalliques.

Ils peuvent être collés et soudés à ces éléments métalliques.

Des inserts métalliques peuvent être prévus dans le plancher dans des zones destinées à être fixées sur les traverses de charge.

Ces inserts peuvent avantageusement être en acier pour présenter une meilleure résistance.

Le plancher peut être pourvu, côté externe à la caisse, de renforts locaux destinés à recevoir des supports d'équipements mis sous caisse.

Les faces latérales peuvent comporter des renforts locaux destinés à la fixation de sièges.

Les éléments métalliques peuvent avantageusement être en aluminium. Ceci leur confère une bonne résistance mécanique pour un faible poids.

L'invention sera mieux comprise et d'autres avantages et particularités apparaîtront à la lecture de la description qui va suivre, donnée à titre d'exemple non limitatif, accompagnée des dessins annexés parmi lesquels:
- la figure 1 est une vue en perspective éclatée d'une caisse de véhicule ferroviaire selon l'art connu,
- la figure 2 est une vue partielle en coupe d'un panneau de matériau composite,
- la figure 3 est une vue en coupe transversale d'une caisse de véhicule ferroviaire selon l'invention,
- la figure 4 est une vue partielle en coupe longitudinale d'une caisse de véhicule ferroviaire selon l'invention,
- les figures 5 à 7 sont des vues de détail d'une caisse de véhicule ferroviaire selon l'invention,
- la figure 8 est une vue simplifiée, en coupe horizontale, d'une caisse de véhicule ferroviaire selon l'invention,
- les figures 9 à 11 représentent des éléments de face latérale pour une caisse de véhicule ferroviaire selon l'invention,
- les figures 12 et 13 sont des vues en coupe représentant des détails de la figure 10,
- la figure 14 est une vue de dessous du plancher de châssis de la caisse de véhicule ferroviaire selon l'invention,
- la figure 15 représente un partie agrandie du plancher de la figure 14,
- la figure 16 est une vue selon la coupe XVI-XVI de la figure 14,
- la figure 17 est une vue selon la coupe XVII-XVII de la figure 15,
- la figure 18 est une vue en coupe longitudinale d'une extrémité de plancher d'une caisse selon l'invention,
- la figure 19 illustre un mode de liaison possible entre différents éléments constituant une caisse de véhicule ferroviaire selon l'invention.

La figure 1 est illustrative de l'art antérieur constitué par le document FR-A-2 613 995. Sur cette figure, la caisse 10 d'un véhicule ferroviaire est constituée essentiellement d'une demi-coque supérieure 12, d'une demi-coque inférieure 14 et de deux parties d'extrémité 16 et 18 qui sont chacune moulées en une seule pièce en un matériau composite. Ce matériau composite comprend, comme on le voit à la figure 2, une âme 20 en mousse à base de résine phénolique et des parements ou revêtements 22 extérieur et intérieur en résine phénolique armée de fibres de verre.

Le matériau composite a des caractéristiques intrinsèques de résistance mécanique telles que la caisse du véhicule est autoportante sans qu'il soit nécessaire de la monter sur une ossature métallique. Les quatre parties 12, 14, 16 et 18 constitutives de la caisse du véhicule sont reliées entre elles par boulonnage et collage.

La demi-coque supérieure 12 constitue le pavillon 24 et les parties supérieures 26 des deux parois latérales du véhicule qui comportent donc les baies 28 et les parties supérieures 30 des ouvertures de portes.

Les parois latérales de la demi-coque inférieure 14 comprennent les parties inférieures 52 des ouvertures de porte.

Comme on le voit bien sur la figure 1, l'assemblage des deux demi-coques se fait sur les portées longues (par exemple celles situées entre deux portes) qui sont difficiles à joindre sur toute la longueur du véhicule.

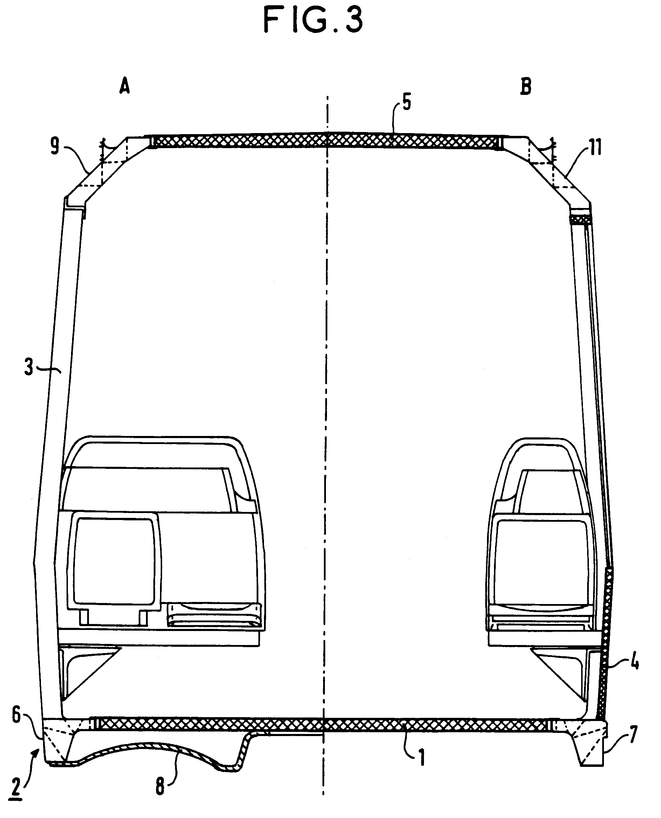

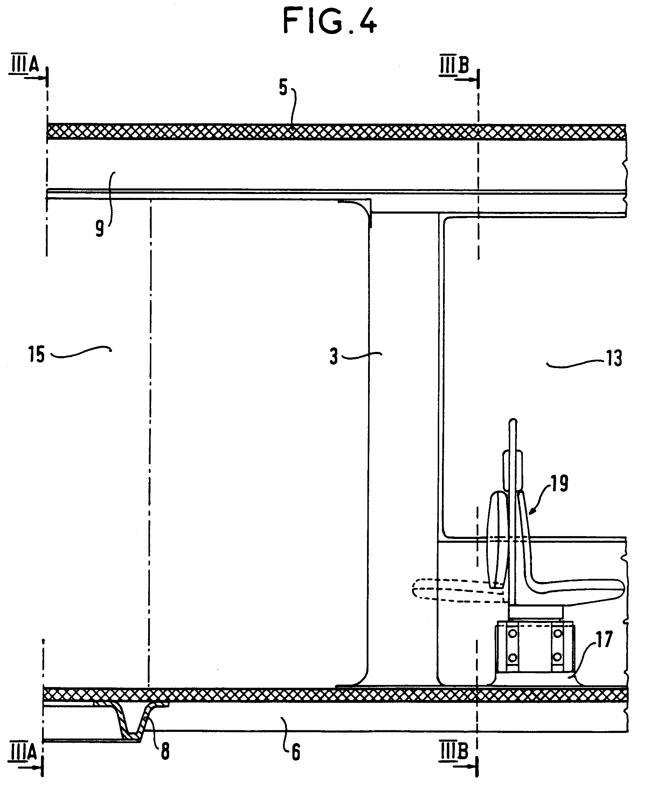

La coupe transversale du véhicule représenté à la figure 3 a été effectuée à deux niveau, selon l'axe longitudinal du véhicule. La partie gauche ou A correspond à la coupe III_{A} de la figure 4. La partie droite ou B correspond à la coupe III_{B} de la figure 4.

La caisse du véhicule comprend des éléments principalement constitués de matériau composite: le plancher 1 du châssis 2, les faces latérales 3 et 4 et le pavillon 5. Ces éléments sont dits principalement constitués de matériau composite parce qu'ils peuvent comporter des parties en matériau non composite, comme les vitres, ou métalliques comme la suite de la description le précisera. Néanmoins, la plus grande partie de leur superficie sera en matériau composite.

Le châssis 2 possède une ossature métallique, avantageusement en aluminium pour alléger le plus possible la caisse. La figure 3 montre, en coupe, deux longerons métalliques 6 et 7 obtenus par exemple par extrusion et une traverse de charge 8 également métallique. Les longerons assurent la liaison mécanique entre le plancher 1 et les faces latérales 3 et 4.

L'ossature du châssis est constituée par l'association de deux longerons et de deux traverses d'extrémité, l'ensemble formant un cadre. Elle comprend également deux traverses de charge grossièrement en forme de T. Chaque T a sa base solidaire d'une traverse d'extrémité, sa barre horizontale étant solidaire, à chaque extrémité, d'un longeron. Les longerons, traverses d'extrémité et de charge sont rendus solidaires entre eux par soudage, boulonnage ou rivetage.

Des battants 9 et 11 assurent la liaison mécanique entre les faces latérales 3 et 4 et le pavillon 5.

Sur la figure 4, on voit notamment la face latérale 3 pourvue d'une baie de vitre 13. Elle est en fait composée de plusieurs parties séparées par les ouvertures de porte telles que l'ouverture 15. L'épaisseur de la face latérale 3 varie selon l'axe longitudinal du véhicule. Elle est plus importante entre l'ouverture de porte et la baie de vitre pour réaliser un montant. Elle est plus faible entre les montants comme cela est mieux visible sur la figure 3. La face latérale est pourvue de renforts locaux, tels que le renfort 17, pour la fixation des sièges 19.

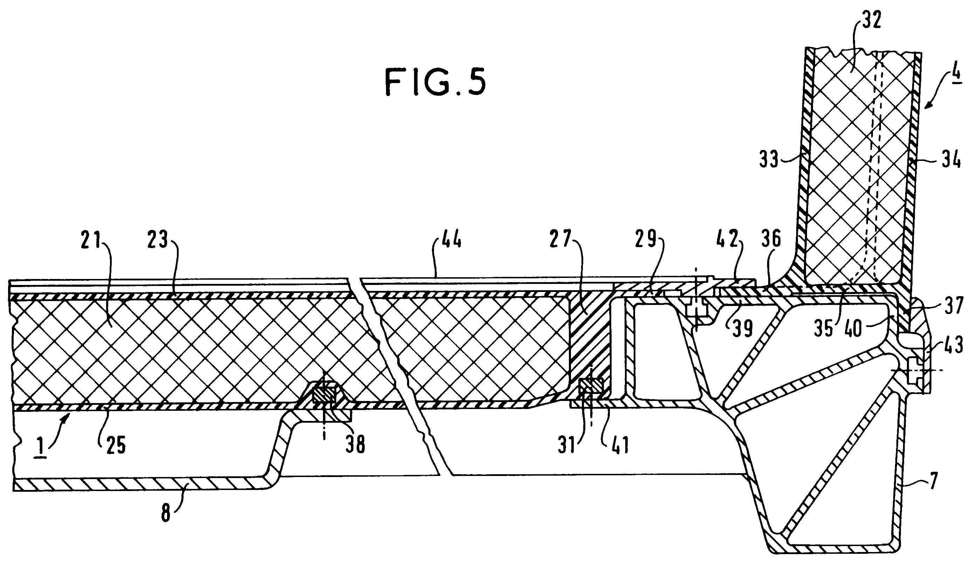

La figure 5 permet de mieux comprendre comment est assurée la liaison entre le plancher et une face latérale. Elle permet également de voir la constitution d'éléments en matériau composite. Le coeur 21 du plancher 1 est par exemple en polyclorure de vinyle ou en nid d'abeilles. Les peaux 23 et 25 qui entourent le coeur 21 peuvent être en fibres de verre liées par de la résine époxy. Les peaux 23 et 25 se regoignent par une bordure de liaison 27 prolongée côté supérieur par un bord dépassant 29. Du côté inférieur du plancher, des inserts métalliques 31 sont prévus dans la bordure 27.

De manière analogue, la face latérale 4 comprend un coeur 32 enfermé entre deux peaux 33 et 34 qui se regoignent par une bordure de liaison 35. La bordure 35 est pourvue de deux bords dépassants : un bord 36 horizontal et intérieur au véhicule et un bord 37 vertical et extérieur.

On remarque encore que la peau 25 du plancher 1 comprend un insert 38 destiné à la fixation par collage et vissage de la traverse de charge 8 sous le plancher 1.

La liaison mécanique du plancher 1 et de la face latérale 4 se fait par collage des bords 29 du plancher 1 et 36 de la face latérale 4 sur la face supérieure 39 du longeron 7, par collage du bord 37 de la face latérale 4 sur la face verticale extérieure 40 du longeron 7 et par collage de la face inférieure de la bordure 27 du plancher 1 sur un prolongement transversal 41 du longeron 7. Un profil métallique 42, de préférence en aluminium, associé au longeron 7 est vissé sur ce longeron et, en recouvrant les bords 29 et 36, assure la pression de collage nécessaire entre le bord 29 et la face 39 d'une part, entre le bord 36 et la face 39 d'autre part. Il en est de même pour le profil 43 vissé sur le longeron 7 qui assure la pression de collage nécessaire entre la face 40 du longeron et le bord 37.

Les inserts 31 permettent la fixation par vissage du prolongement 41 sur la bordure 27 et assurent la pression de collage nécessaire entre ce prolongement et cette bordure.

Le profil 42 permet également de délimiter l'emplacement du revêtement de plancher 44.

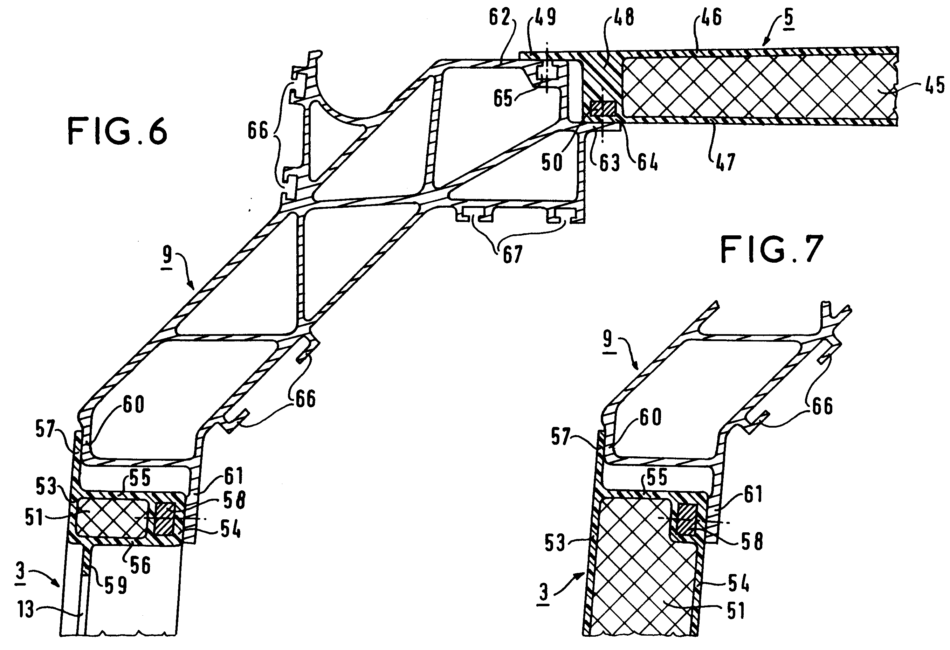

La figure 6 permet de mieux voir l'un des battants de pavillon. Le battant 9 est de préférence réalisé en aluminium extrudé. Il relie la face latérale 3 au pavillon 5. Le pavillon 5 comprend un coeur 45 entouré de deux peaux 46 et 47 qui se rejoignent par une bordure de liaison 48 prolongée côté supérieur par un bord dépassant 49. Côté intérieur au véhicule, la bordure 48 comprend des inserts métalliques 50.

Sur la figure 6, la face latérale 3 est vue en coupe au niveau d'une baie de vitre. On n'aperçoit que la partie du coeur 51 qui borde la partie supérieure de la baie de vitre 13. Le coeur 51 est compris entre les peaux 53 et 54 qui se rejoignent en partie haute par une bordure de liaison 55 et en partie basse par une bordure de liaison 56. La bordure 55 comporte un prolongement vertical 57 dirigé vers le haut. La peau 54 comporte des inserts métalliques 58. La bordure 56 comporte un prolongement vertical 59 dirigé vers le bas qui permettra la mise en place de la vitre par l'intermédiaire d'un joint.

Au montage de la caisse, le battant 9 est rendu solidaire de la face latérale 3 par collage et vissage. Le prolongement vertical 57 est collé sur la partie 60 du battant 9 située en vis-à-vis. La peau 54 est collée sur un prolongement inférieur 61 du battant 9. Les inserts 58 permettent le vissage du prolongement inférieur 61 sur la peau 54 et assurent la pression nécessaire au collage de ces parties, ainsi que pour le collage de la partie 60 sur le prolongement 57.

Le pavillon 5 est également rendu solidaire du battant 9 par collage et vissage. Le bord dépassant 49 est collé sur la face supérieure 62 du battant 9. Un prolongement horizontal 63 du battant est collé sur la bordure 64 de la peau 47 du pavillon. Les inserts 50 permettent le vissage du prolongement 63 sur la bordure 64 et assurent la pression nécessaire au collage. De même, le bord dépassant 49 est pressé sur la face supérieure 62 par boulonnage rendu possible par les logements d'écrous 65 prévus dans le battant 9.

On remarque que le battant possède d'autres éléments de forme, tels ceux référencés 66, 67 et 68, destinés à la fixation d'accessoires: éléments d'éclairage, câbles électriques, moteurs d'ouverture de porte, tôles interne et externe de plafond, etc....

La figure 7 est une vue correspondant à la figure 6 mais la coupe a été faite au niveau d'un montant de porte ce qui permet de voir le coeur 51 dans sa totalité.

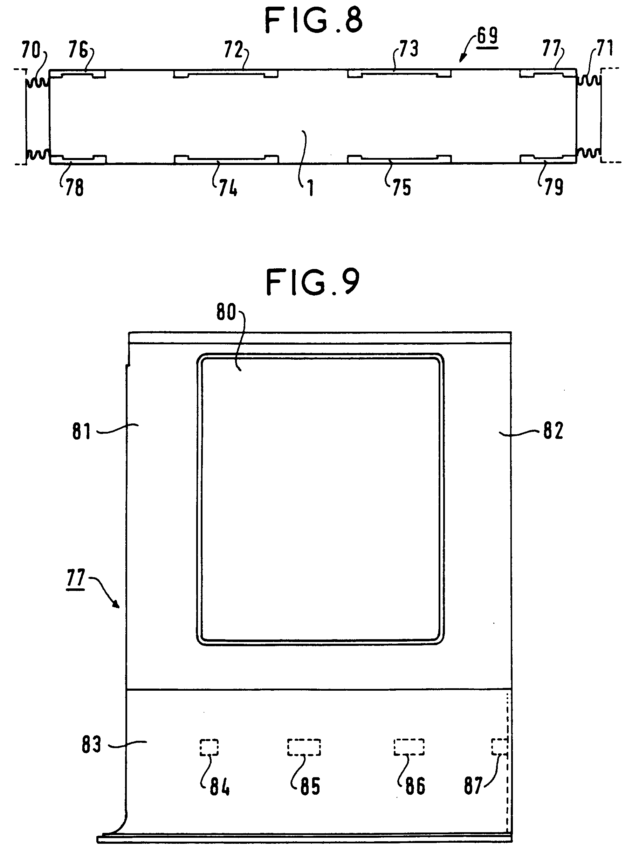

La coupe horizontale de la figure 8 permet de voir la structure d'une caisse 69 d'un véhicule ferroviaire placé entre deux autres véhicules et dont le passage à ces véhicules est assuré par des zones d'intercirculation 70 et 71. La coupe permet de montrer le plancher 1 et les différentes parties formant les faces latérales. Celles-ci comprennent des parties 72, 73, 74 et 75 entre ouvertures de porte et des parties d'extrémité 76, 77, 78 et 79.

La figure 9 représente une partie d'extrémité, par exemple la partie 77, telle qu'on peut la voir de l'intérieur du véhicule. Elle est pourvue d'une baie de vitre 80 entre deux montants 81 et 82. La partie basse 83 est renforcée: son épaisseur est plus importante et elle comprend des inserts 84, 85, 86 et 87 destinés à la fixation de sièges.

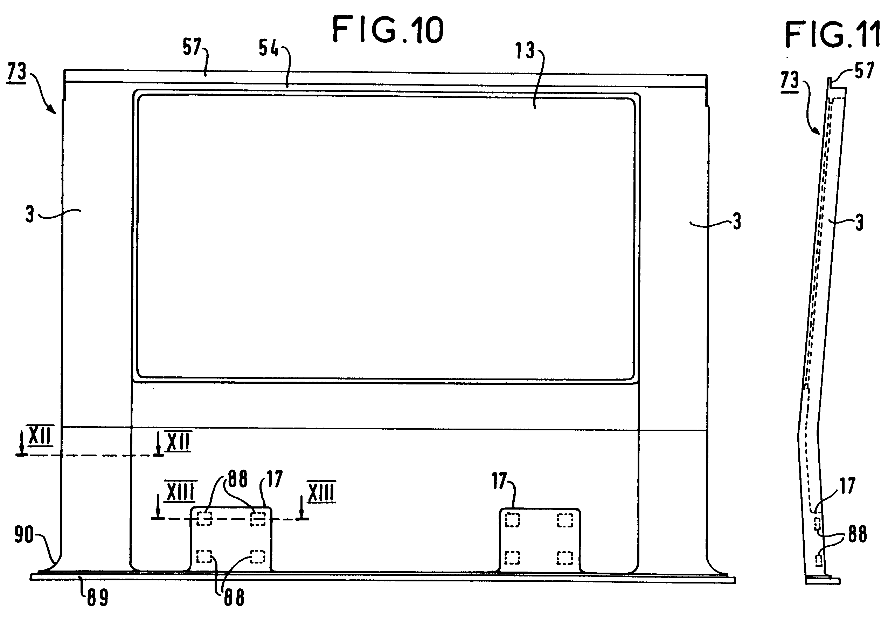

La figure 10 représente une partie de face latérale entre ouvertures de porte, par exemple la partie 73, telle qu'on peut la voir de l'intérieur du véhicule. La figure 11 est une vue de côté de la partie 73. Cette partie est partiellement visible sur la figure 4. Les renforts 17 comprennent des inserts 88 permettant la fixation des sièges. La figure 11 permet de se représenter la forme galbée des faces latérales.

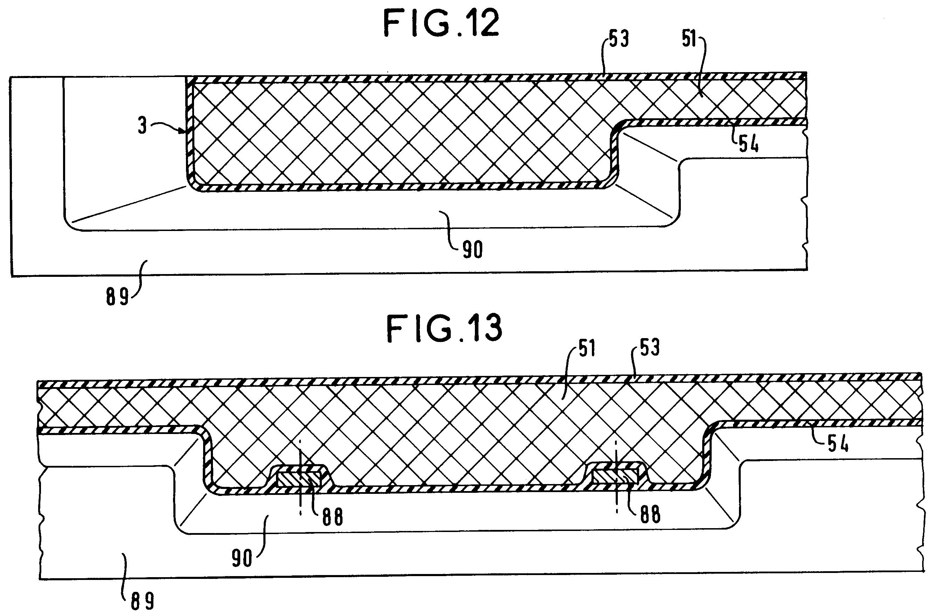

La figure 12 est une coupe selon l'axe XII-XII de la figure 10. On y voit en particulier la section du montant 3. On remarque le bord horizontal 89, correspondant au bord horizontal 36 de la figure 5, et destiné à la fixation de cette partie de face latérale sur le longeron correspondant. La référence 90 représente le congé de raccordement entre les parties verticale et horizontale de cette partie de face latérale.

La figure 13 est une coupe selon l'axe XIII-XIII de la figure 10. On y retrouve donc des éléments communs à ces figures.

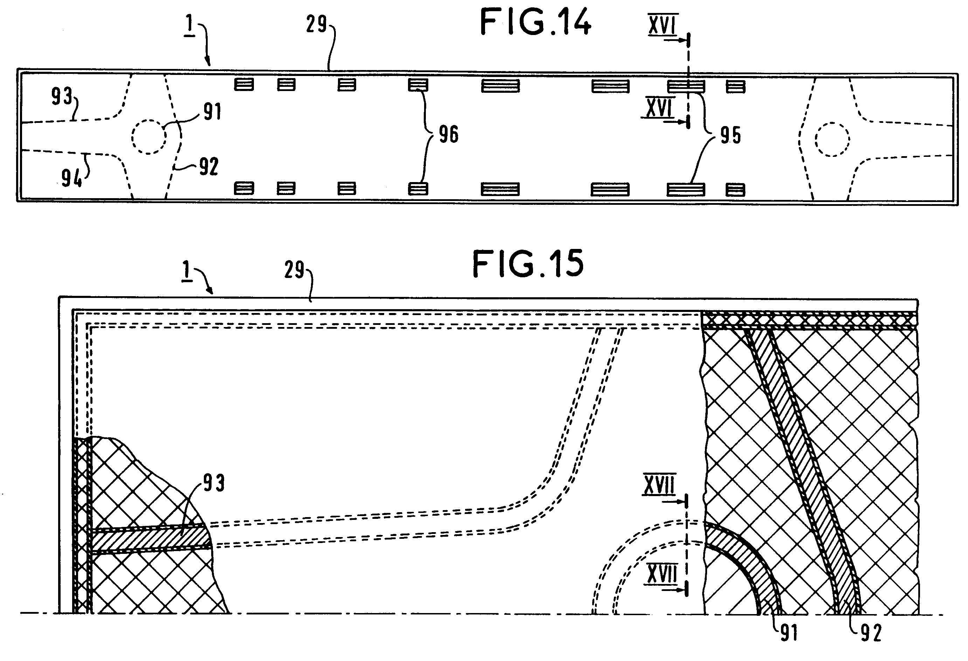

La figure 14 représente le plancher 1 vu de dessous. On y reconnaît le bord dépassant 29 visible sur la figure 5. Sous les références 91, 92, 93 et 94 on a figuré l'emplacement dans le plancher d'inserts métalliques situés dans des zones destinées à être fixées sur les traverse de charge. Le dessous du plancher est également pourvu de renforts locaux de différentes longueurs, tels ceux référencés 95 et 96 destinés à recevoir des supports d'équipements mis sous caisse.

La figure 15 permet de mieux comprendre la disposition des inserts correspondant à une traverse de charge. On y reconnaît les inserts 91, 92 et 93. La figure 15 comprend deux arrachements, chacun laissant voir des niveaux de plancher différents. Les figures suivantes permettront de mieux comprendre la structure de ce plancher.

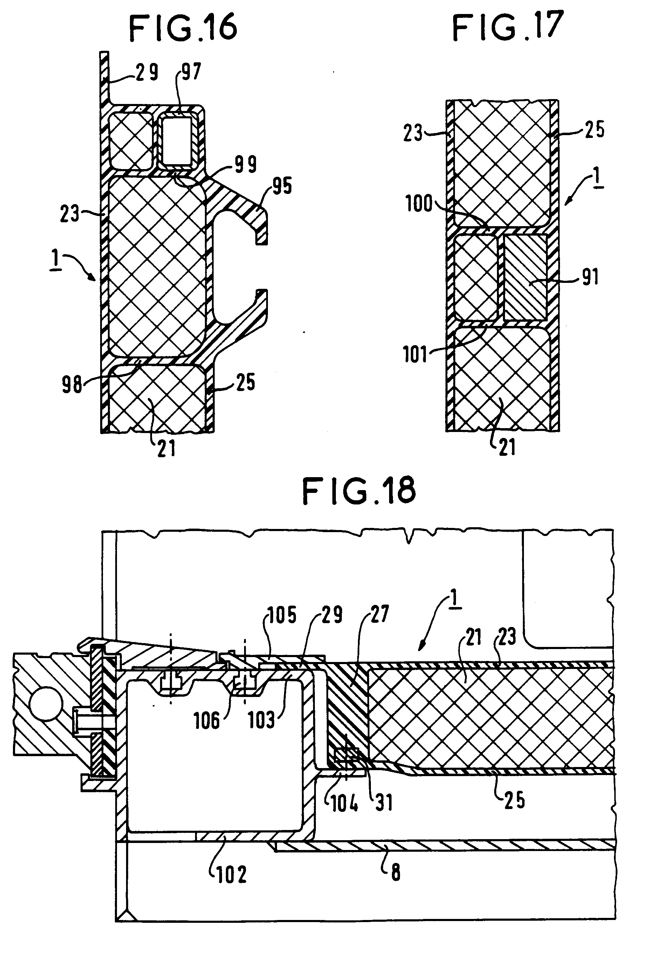

La figure 16 est une vue en coupe permettant de mieux voir la forme donnée au renfort 95. Cette figure correspond en fait à une variante du plancher de la figure 5. En effet, la fixation du plancher sur l'un des longerons ne se fait plus par collage et vissage dans un insert (voir l'insert 31 de la figure 5) mais par collage et rivetage grâce à la présence d'un insert 97 de section tubulaire. Des peaux transversales 98 et 99 permettent de rigidifier un peu plus le plancher dans la zone du renfort 95. Sur cette figure, on voit bien que la section du renfort 95 permet la mise en place et la retenue de supports pour le maintien d'équipements sous caisse.

La figure 17 permet de voir la section de l'insert 91 qui est analogue à la section des inserts 92, 93 et 94. Des peaux transversales 100 et 101 permettent là aussi la rigidification locale du plancher.

La figure 18 permet de montrer la liaison entre le plancher 1 et l'une des traverses d'extrémité 102. Le plancher est fixé sur la traverse d'extrémité 102 par collage du bord dépassant 29 sur la face supérieure 103 de la traverse 102 et par collage de la face inférieure de la bordure 27 sur un rebord horizontal 104 de la traverse d'extrémité. Le rebord horizontal 104 est vissé, grâce aux inserts 31 sur la bordure 27. Un profil 105 est fixé sur la face supérieure 103 par boulonnage rendu possible par les logements d'écrous 106 prévus dans la traverse 102. On assure ainsi la pression nécessaire au collage.

Sur la figure 18 on remarque la présence d'une traverse de charge 8 soudée à la traverse d'extrémité 102 et qui ira en s'incurvant vers le plancher 1 comme le montrent les figures 3, 4 et 5.

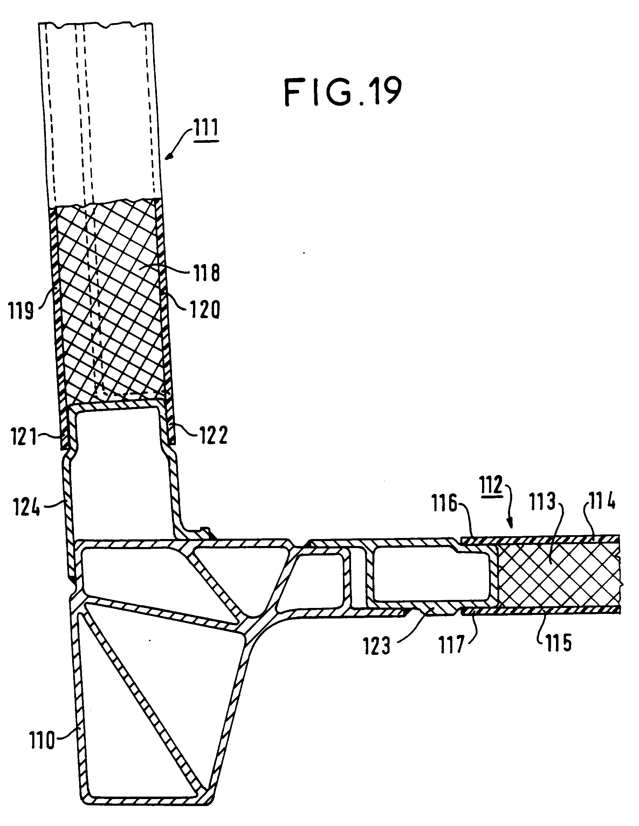

La description a porté sur l'assemblage par collage et boulonnage (ou rivetage) d'éléments en matériau composite. Au lieu de boulonner ou de riveter, on peut procéder à l'assemblage par soudage associé au collage. Pour cela on utilise des profils métalliques, en aluminium de préférence, bordant les éléments en matériau composite. Ces profils sont d'un côté collés sur ces éléments et de l'autre soudés aux structures métalliques adjacentes. Ceci est illustré par la figure 19 où l'on montre une liaison entre une face latérale 111 et un longeron 110 d'une part et entre ce longeron 110 et un plancher 112 d'autre part.

Le plancher 112 comprend un coeur 113 entre deux peaux 114 et 115 qui possèdent en bordure de plancher des prolongements parallèles 116 et 117. La face latérale 111 comprend un coeur 118 entre deux peaux 119 et 120 qui possèdent des prolongements parallèles 121 et 122 vers le longeron 110.

Le plancher 112 est bordé, côté longeron 110, par un profil 123 s'encastrant entre les prolongements 116 et 117 auxquels il est collé. La face latérale 111 est bordée côté longeron 110, par un profil 124 s'encastrant entre les prolongements 121 et 122 auxquels il est collé.

Comme le montre la figure 19, les profils 123 et 124 sont soudés sur le longeron 110.

## Revendications

1. Caisse de véhicule ferroviaire allégée comprenant:
- un châssis possèdant une ossature formée de deux longerons (6, 7), de deux traverses d'extrémité (102) et de traverses de charge (8),
- un plancher (1) de châssis (2),
- des faces latérales (3, 4),
- un pavillon (5),
- deux battants (9, 11) reliant ledit pavillon (5) auxdites faces latérales (3, 4) et éventuellement
- des extrémités de caisse,
dans laquelle:
- lesdits deux longerons (6, 7), lesdites deux traverses d'extrémité (102), lesdites traverses de charge (8) et lesdits deux battants (9, 11) sont des éléments métalliques, et
- ledit plancher (1) de châssis (2), lesdites faces latérales (3, 4), ledit pavillon (5) et lesdites extrémités de caisse sont des éléments principalement constitués de matériau composite,
caractérisée en ce que:
- ledit plancher (1) de châssis (2), lesdites faces latérales (3, 4), ledit pavillon (5) et lesdites extrémités de caisse sont des éléments monoblocs.

2. Caisse de véhicule ferroviaire selon la revendication 1, caractérisée en ce que lesdits deux battants sont reliés entre eux par des traverses de bout métalliques.

3. Caisse de véhicule ferroviaire selon l'une des revendications 1 ou 2, caractérisée en ce que les liaisons entre lesdits éléments principalement constitués de matériau composite et lesdits éléments métalliques sont réalisées par l'intermédiaire de profils métalliques (123, 124) bordant les éléments principalement constitués de matériau composite (111, 112) et qui leur sont solidaires.

4. Caisse de véhicule ferroviaire selon la revendication 3, caractérisée en ce que la solidarisation entre les profils métalliques (123, 124) et les éléments principalement constitués de matériau composite (111, 112) est réalisée par collage.

5. Caisse de véhicule ferroviaire selon l'une des revendications 3 ou 4, caractérisée en ce que les profils métalliques sont collés et boulonnés aux éléments métalliques.

6. Caisse de véhicule ferroviaire selon l'une des revendications 3 ou 4, caractérisée en ce que les profils métalliques sont collés et soudés aux éléments métalliques.

7. Caisse de véhicule ferroviaire selon l'une quelconque des revendications 1 à 6, caractérisée en ce que des inserts métalliques (91 à 94) sont prévus dans le plancher (1) dans des zones destinées à être fixées sur les traverses de charge.

8. Caisse de véhicule ferroviaire selon la revendication 7, caractérisée en ce que les inserts sont en acier.

9. Caisse de véhicule ferroviaire selon l'une quelconque des revendications 1 à 8, caractérisée en ce que le plancher est pourvu, côté externe à la caisse, de renforts locaux (95, 96) destinés à recevoir des supports d'équipements mis sous caisse.

10. Caisse de véhicule ferroviaire selon l'une quelconque des revendications 1 à 9, caractérisée en ce que les faces latérales comportent des renforts locaux (17) destinés à la fixation de sièges.

11. Caisse de véhicule ferroviaire selon l'une quelconque des revendications précédentes, caractérisée en ce que lesdits éléments métalliques sont en aluminium.

## Claims

1. A lightweight rail vehicle body comprising:
an underframe having a framework formed by two side sills (6, 7), two end sills (102), and load-bearing crosspieces (8);
a floor (1) of the underframe (2);
side faces (3, 4);
a roof (5);
two cantrails (9, 11) connecting said roof (5) to said side faces (3, 4); and optionally
body ends;
in which body:
said two side sills (6, 7), said two end sills (102), said load-bearing crosspieces (8) and said two cantrails (9, 11) are metal elements; and
said floor (1) of the underframe (2), said side faces (3, 4), said roof (5) and said body ends are elements that are mainly made of composite material;
said body being characterized in that:
said floor (1) of the underframe (2), said side faces (3, 4), said roof (5), and said body ends are one-piece elements.

2. A rail vehicle body according to claim 1, characterized in that said two cantrails are connected together by metal end crosspieces.

3. A rail vehicle body according to claim 1 or 2, characterized in that said elements that are mainly made of composite material are secured to said metal elements via shaped section members (123, 124) bordering the elements that are mainly made of composite material (111, 112) and secured thereto.

4. A rail vehicle body according to claim 3, characterized in that the metal shaped section members (123, 124) are secured to the elements that are mainly made of composite material (111, 112) by gluing.

5. A rail vehicle body according to claim 3 or 4, characterized in that the metal shaped section members are glued and bolted to the metal elements.

6. A rail vehicle body according to claim 3 or 4, characterized in that the metal shaped section members are glued and welded to the metal elements.

7. A rail vehicle body according to any one of claims 1 to 6, characterized in that metal inserts (91 to 94) are provided in the floor (1) in zones to be fixed to the load-bearing crosspieces.

8. A rail vehicle body according to claim 7, characterized in that the inserts are made of steel.

9. A rail vehicle body according to any one of claims 1 to 8, characterized in that, on the outside of the body, the floor is provided with local reinforcements (95, 96) for receiving supports for equipment slung under the body.

10. A rail vehicle body according to any one of claims 1 to 9, characterized in that the side faces are provided with local reinforcements (17) serving to fix seats.

11. A rail vehicle body according to any preceding claim, characterized in that said metal elements are made of aluminum.

## Patentansprüche

1. Leichtbau-Wagenkasten eines Schienenfahrzeugs, welcher umfasst:
- ein Untergestell, das einen aus zwei Längsträgern (6, 7), zwei Endquerträgern (102) und Lastquerträgern (8) gebildeten geschlossenen Rahmen aufweist,
- eine Decke (1) des Untergestells (2),
- Seitenflächen (3, 4),
- einen Himmel (5),
- zwei Oberrahmen (9, 11), die den Himmel (5) mit den Seitenflächen (3, 4) verbinden, und eventuell
- Untergestellenden,
bei dem:
- die beiden Längsträger (6, 7), die beiden Endquerträger (102), die Lastquerträger (8) und die beiden Oberrahmen (9, 11) Metallelemente sind und
- die Decke (1) des Untergestells (2), die Seitenflächen (3, 4), der Himmel (5) und die Untergestellenden Elemente sind, die hauptsächlich aus Verbundwerkstoff bestehen,
**dadurch gekennzeichnet**, dass
- die Decke (1) des Untergestells (2), die Seitenflächen (3, 4), der Himmel (5) und die Untergestellenden einstückige Elemente sind.

2. Wagenkasten eines Schienenfahrzeugs nach Anspruch 1, dadurch gekennzeichnet, dass die beiden Oberrahmen durch metallische Endquerträger miteinander verbunden sind.

3. Wagenkasten eines Schienenfahrzeugs nach einem der Ansprüche 1 oder 2, dadurch gekennzeichnet, dass die Verbindungen zwischen den hauptsächlich aus Verbundwerkstoff bestehenden Elementen und den Metallelementen mittels Metallprofilen (123, 124) ausgeführt sind, die die hauptsächlich aus Verbundwerkstoff bestehenden Elemente (111, 112) einfassen und mit ihnen fest verbunden sind.

4. Wagenkasten eines Schienenfahrzeugs nach Anspruch 3, dadurch gekennzeichnet, dass die Verbindung zwischen den Metallprofilen (123, 124) und den hauptsächlich aus Verbundwerkstoff bestehenden Elementen (111, 112) durch Kleben ausgeführt ist.

5. Wagenkasten eines Schienenfahrzeugs nach einem der Ansprüche 3 oder 4, dadurch gekennzeichnet, dass die Metallprofile an die Metallelemente geklebt oder geschraubt sind.

6. Wagenkasten eines Schienenfahrzeugs nach einem der Ansprüche 3 oder 4, dadurch gekennzeichnet, dass die Metallprofile an die Metallelemente geklebt oder geschweißt sind.

7. Wagenkasten eines Schienenfahrzeugs nach einem der Ansprüche 1 bis 6, dadurch gekennzeichnet, dass in der Decke (1) in bestimmten Zonen Metalleinsätze (91 bis 94) vorgesehen sind, die dazu bestimmt sind, an den Lastquerträgern befestigt zu werden.

8. Wagenkasten eines Schienenfahrzeugs nach Anspruch 7, dadurch gekennzeichnet, dass die Einsätze aus Stahl sind.

9. Wagenkasten eines Schienenfahrzeugs nach einem der Ansprüche 1 bis 8, dadurch gekennzeichnet, dass die Decke auf der Außenseite des Untergestells mit lokalen Verstärkungen (95, 96) versehen ist, die dazu bestimmt sind, Träger für unter das Untergestell gesetzte Ausrüstungen aufzunehmen.

10. Wagenkasten eines Schienenfahrzeugs nach einem der Ansprüche 1 bis 9, dadurch gekennzeichnet, dass die Seitenfläche lokale Verstärkungen (17) aufweisen, die zur Befestigung von Sitzen bestimmt sind.

11. Wagenkasten eines Schienenfahrzeugs nach einem der vorhergehenden Ansprüche, dadurch gekennzeichnet, dass die Metallelemente aus Aluminium sind.
